# EUROPEAN PATENT APPLICATION

(11) **EP 2 629 128 A1**
(43) Date of publication of application: **21.08.2013**
(21) Application number: 12155421.6
(22) Date of filing: 14.02.2012
(51) Int. Cl.: G02B 6/44

(54) **Fiber optic distribution device**

(71) Applicant: CCS Technology, Inc., Wilmington, DE 19803 (US)
(72) Inventor: Ciechomski, Tomasz, 99-400 Lowicz (PL); Ruda, Michal, 93-377 Lodz (PL); Malalopszy, Bartosz, 92-508 Lodz (PL); Strunck, Sven, 13156 Berlin (DE)
(74) Representative: Sturm, Christoph

(57) **Abstract**

A fiber optic distribution device (10), namely distribution cabinet or distribution frame, having a mounting frame (11), wherein the mounting frame (11) has a front area (12) and a back area (13), wherein elements for handling optical fibers are mounted on the mounting frame (11), wherein a plurality of first fiber optic management units (14) comprising elements for accommodating spliced joints between optical fibers and/or patch connections between optical fibers and/or optical splitters and/or wave division filters is mounted vertically above each other to the front area (12) of the mounting frame (11) in such a way that each of the first fiber optic management units (14) is individually pivotable relative to the mounting frame (11); wherein a plurality of second fiber optic management units (15) comprising elements for handling optical cables containing the optical fibers is mounted vertically above each other to the back area (13) of the mounting frame (11) in such a way that each of the second fiber optic management units (15) is fixedly attached to the mounting frame (11).

## Description

The present patent application relates to a fiber optic distribution device. Further on, the present patent application relates to a fiber optic management unit for use in such a fiber optic distribution device.

When designing data transmission networks comprising optical fibers, it is necessary to connect optical fibers to one another. Such junctions need to be handled both outside buildings and inside buildings. Outside buildings, junctions between optical fibers are accommodated in so called cable sleeves or street cabinets. Inside buildings, junctions between optical fiber are handled in so called distribution cabinets or distribution frames. The present application relates to indoor fiber optic distribution devices.

In order to reduce costs of fiber optic equipment it is known from practice to share fiber optic equipment between several providers and customers. This is possible by using passive optical network (PON) architectures. Such passive optical network architectures use passive components being able to split a single signal into plurality of signals, where each split signal is received by a single end user. Nowadays, there are commonly two types of devices that are used for such purposes, namely optical splitters and wave division filters, namely wave division multiplexers (WDM) and wave division demultiplexers. Passive optical splitters operation is based on a power split of an input signal into required number of output signals, e.g. 1:4 splitters, where 100% of one input signal is split into four outputs signals each having 25% of input's signal power. The operation of wave division filters is based on merging of several wavelengths into a single signal being composed of these wavelengths. Demultiplexers are used to extract a given wavelength from a wider spectrum of wavelengths.

DE 20 2009 009 820 U discloses a fiber optic distribution device having a substantially perpendicular mounting frame with a front area and a back area, wherein elements, namely splice cassettes, for handling optical fibers are mounted on the mounting frame.

The present application is based on the problem of providing a novel fiber optic distribution device and a novel fiber optic management unit suitable for using the same within passive optical network architectures.

The fiber optic distribution device according to the present patent application is defined in claim 1. The fiber optic distribution device according to the present patent application comprises a plurality of first fiber optic management units comprising elements for accommodating spliced joints between optical fibers and/or patch connections between optical fibers and/or optical splitters and/or wave division filters. The plurality of first fiber optic management units is mounted vertically above each other to the front area of the mounting frame in such a way that each of the first fiber optic management units is individually pivotable around a vertical axis. Further on, the fiber optic distribution device according to the present patent application comprises a plurality of second fiber optic management units comprising elements for handling optical cables containing the optical fibers. The plurality of second fiber optic management units is mounted vertically above each other to the back area of the mounting frame in such a way that each of the second fiber optic management units is fixedly attached to the mounting frame.

The fiber optic distribution device according to the present patent application is a modular, flexible and high density fiber optic distribution device especially designed for use in passive optical network architectures. The fiber optic distribution device according to the present patent application is modular and scalable. The fiber optic distribution device according to the present patent application allows for a high density of wave division filters.

The first fiber optic management units being individually hinged to the mounting frame allow easy access to both the first fiber optic management units at the front area of the mounting frame and the second fiber optic management units at the back area of the mounting frame.

Preferably, each of the first fiber optic management units comprises a supporting element and a cover element. Each first fiber optic management unit including the respective supporting element and the respective cover element is individually pivotable around a first vertical axis relative to the mounting frame. Each cover element of each of the first fiber optic management units is individually pivotable around a second vertical axis relative to the supporting element of the respective first fiber optic management unit. The first vertical axis and the second vertical axis are running in parallel to each other. This provides a high density solution of a fiber optic distribution device and good access to both the first fiber optic management units and the second fiber optic management units.

Preferably, each of the first fiber optic management units comprises at least two stacks of splice trays mounted to a front side of the supporting element of the respective first fiber optic management unit and at least two stacks of splice trays mounted to a back side of the supporting element of the respective first fiber optic management unit. A first stack of splice trays mounted to the front side as well as a first stack of splice trays mounted to the back side are adapted to accommodate a plurality of wave division filters spliced to one another. A second stack of splice trays mounted to the front side as well as a second stack of splice trays mounted to the back side are adapted to accommodate a plurality of splices between input and/or output fibers of the wave division filters and optical fibers contained in the optical cables. This allows to further increase density of wave division filters and optical fibers.

According to a preferred further development, each of the first fiber optic management units comprises a patch panel with a plurality of adapters adapted to receive connectors of test devises for determining signal quality. This allows an easy testing without needing access to the splice trays.

The novel fiber optic management unit is defined in claim 12.

Preferred embodiments of the fiber optic distribution device and fiber optic management unit are given in the dependent claims and the description below. Exemplary embodiments will be explained in more detail with reference to the drawing, in which:
- Figure 1: shows a perspective front view of a fiber optic distribution device together with a plurality of first fiber optic management units;
- Figure 2: shows perspective back view of a fiber optic distribution device together with a plurality of second fiber optic management units;
- Figure 3: shows a first perspective front view of a detail of Figure 1 together with one first fiber optic management unit;
- Figure 4: shows a second perspective front view of the detail of Figure 3;
- Figure 5: shows a first perspective front view of one first fiber optic management unit;
- Figure 6: shows a second perspective front view of one first fiber optic management unit; and
- Figure 7: shows a perspective back view of one first fiber optic management unit;
- Figure 8: shows a detail of the first fiber optic management units;
- Figure 9: shows the detail of Figure 8 in a second status of the same.

The preset application relates to a fiber optic distribution device like a distribution cabinet used in indoor applications for the handling of connections between optical fibers.

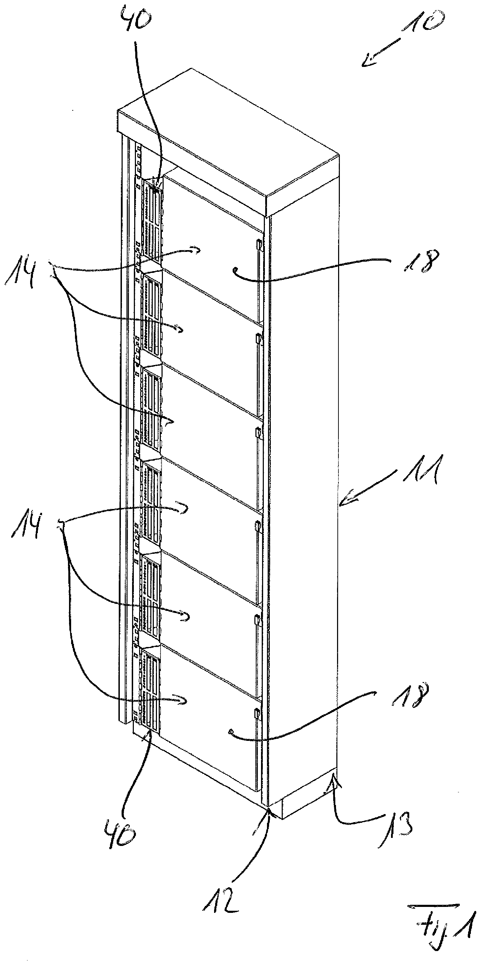

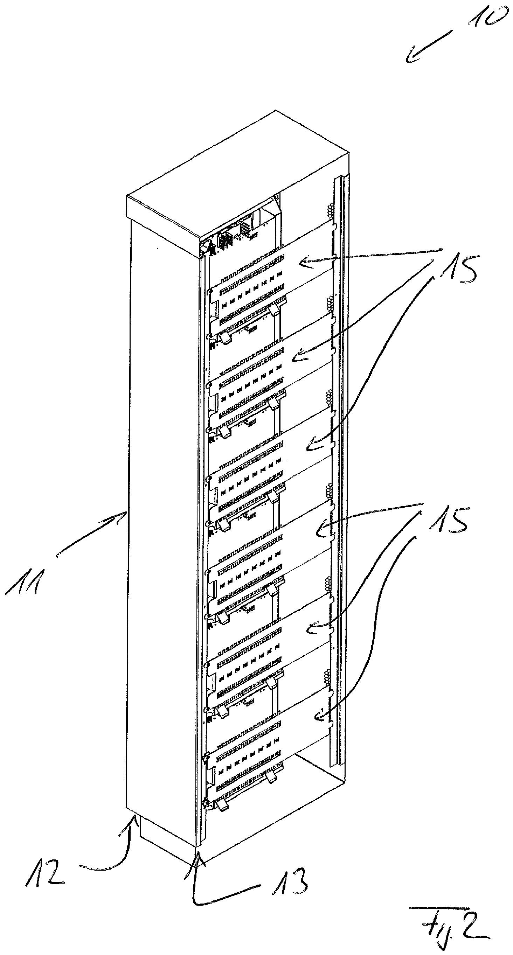

Figure 1 shows a perspective front view and Figure 2 shows a perspective back view of a fiber optic distribution device 10. The fiber optic distribution device 10 comprises a mounting frame 11, wherein the mounting frame 11 has a front area 12 and a back area 13.

A plurality of first fiber optic management units 14 comprising elements for accommodating spliced joints between optical fibers and/or patch connections between optical fibers and/or passive optical splitters and/or wave division filters like wave division multiplexers and wave division demultiplexers is mounted vertically above each other to the front area 12 of the mounting frame 11.

In the shown embodiment there are six first fiber optic management units 14 mounted vertically above each other to the front area 12 of the mounting frame 11. The number of first fiber optic management units 14 can be different.

Each of the first fiber optic management units 14 is individually pivotable relative to the mounting frame 11.

A plurality of second fiber optic management units 15 comprising elements for handling optical cables containing the optical fibers is mounted vertically above each other to the back area 13 of the mounting frame 11.

In the shown embodiment there are six second fiber optic management units 15 mounted vertically above each other to the back area 13 of the mounting frame 11. The number of second fiber optic management units 15 can be different.

Each of the second fiber optic management units 15 is fixedly attached to the mounting frame 11.

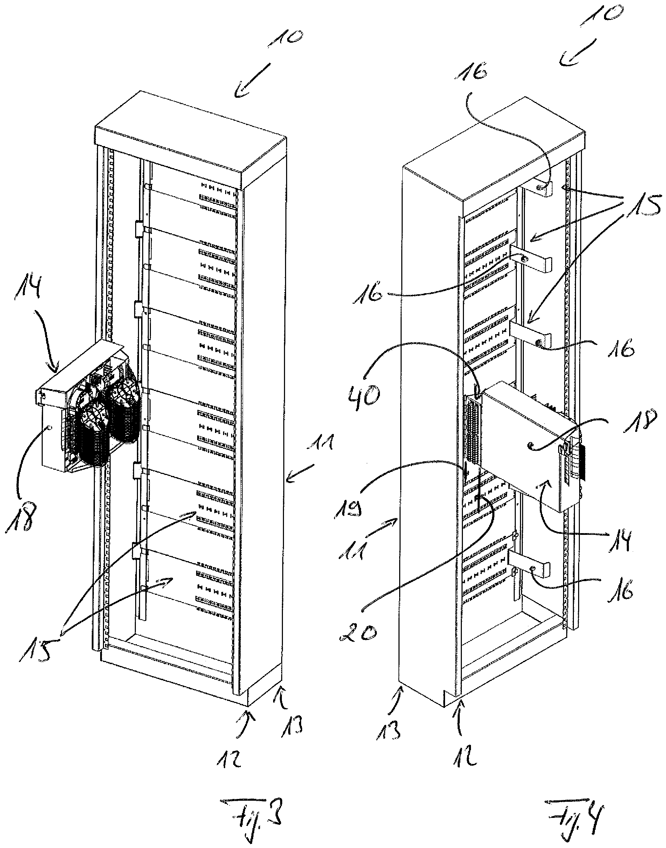

Each of the second fiber optic management units 15 provides guiding brackets 16 (see Figure 4) for guiding optical cables inside the mounting frame 11. The second fiber optic management units 15 further comprise not shown strain relief elements for providing strain relief to optical cables entering into the fiber optic distribution device 10 through the back area 13 of the same. The second fiber optic management units 15 further comprise not shown furcation elements for furcating the fiber optic cables containing optical fibers into fiber bundles protected by a tube or a buffer element.

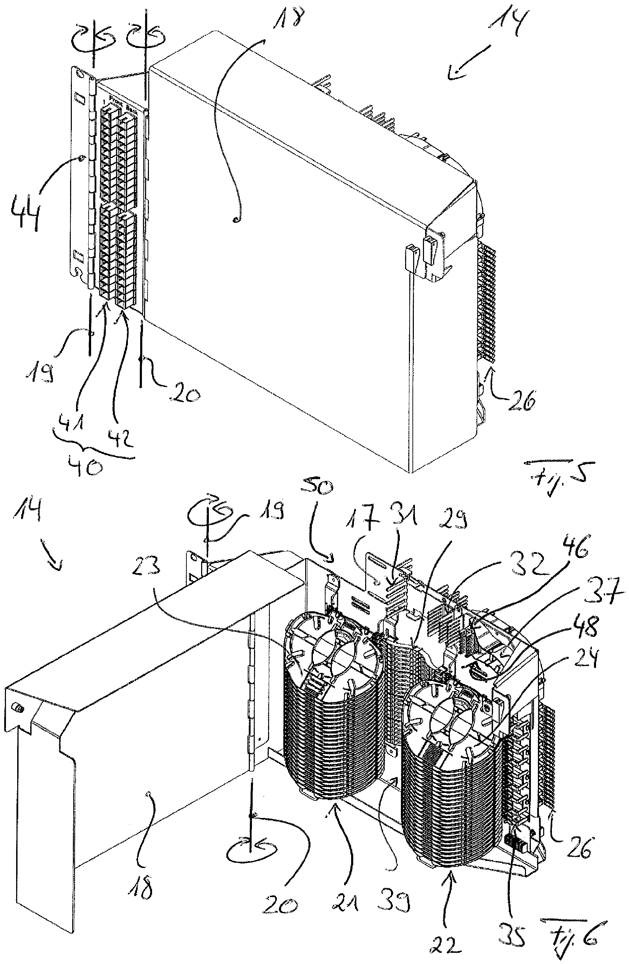

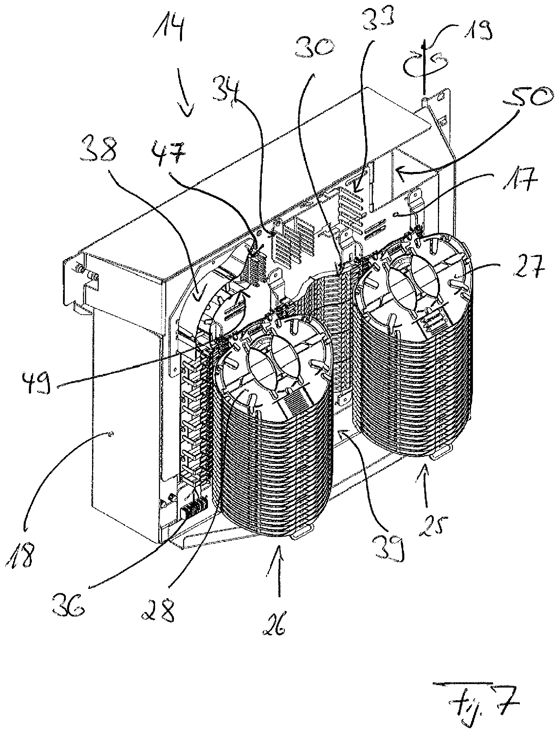

Each of the first fiber optic management units 14 (see Figures 5 to 7) comprises a supporting element 17 and a cover element 18. Each first fiber optic management unit 14 including the respective supporting element 17 and the respective cover element 18 is individually pivotable around a first vertical axis 19 relative to the mounting frame 11. Further on, the cover element 18 of each of the first fiber optic management units 14 is individually pivotable around a second vertical axis 20 relative to the supporting element 17 of the respective first fiber optic management unit 14. The first vertical axis 19 and the second vertical axis 20 run in parallel to each other.

Due to the fact that on the one hand the cover element 18 of each first fiber optic management unit 14 is individually pivotable around the second vertical axis 20 relative to the supporting element 17 of the respective first fiber optic management unit 14 and that on the other hand each first fiber optic management unit 14 including the respective supporting element 17 and the respective cover element 18 is individually pivotable around the first vertical axis 19 relative to the mounting frame 11, the fiber optic distribution device 10 provides extraordinary access to all sections of the fiber optic distribution device 10, namely to the first fiber optic management units 14 and to the second fiber optic management units 15.

Each of the first fiber optic management units 14 comprises at least two stacks 21, 22 of splice trays 23, 24 mounted side by side to a front side of the supporting element 17 of the respective first fiber optic management unit 14 and at least two stacks 25, 26 of splice trays 27, 28 mounted side by side to a back side of the supporting element 17 of the respective first fiber optic management unit 14.

A first stack 21 of splice trays 23 mounted to the front side of the respective supporting element 17 as well as a first stack 25 of splice trays 27 mounted to the back side of the respective supporting element 17 are adapted to accommodate a plurality of wave division filters spliced to one another.

A second stack 22 of splice trays 24 mounted to the front side of the respective supporting element 17 as well as a second stack 26 of splice trays 28 mounted to the back side of the respective supporting element 17 are adapted to accommodate a plurality of splices between input/output fibers of the wave division filters and optical fibers contained in the optical cables.

The first stack 21 of splice trays 23 mounted to the front side of the respective supporting element 17 as well as the first stack 25 of splice trays 27 mounted to the back side of the supporting element 17 of the respective first fiber optic management unit 14 are proximate the second vertical axis 20.

The second stack 22 of splice trays 24 mounted to the front side as well as the second stack 26 of splice trays 28 mounted to the back side of the supporting element 17 of the respective first fiber optic management unit 14 are remote from the second vertical axis 29.

Guiding elements 29, 30 are mounted to the front side and to the back side of the supporting element 17 of the respective first fiber optic management unit 14. The guiding elements 29, 30 are positioned between the respective first stacks 21, 25 of splice trays and the respective second stacks 22, 26 of splice trays.

The guiding element 29 is assigned to the front wall of the supporting element 17 and is positioned between first stack 21 of splice trays 23 mounted to the front side of the respective supporting element 17 and the second stack 22 of splice trays 24 also mounted to the front side of the respective supporting element 17.

The guiding element 30 is assigned to the back wall of the supporting element 17 and is positioned between first stack 25 of splice trays 27 mounted to the back side of the respective supporting element 17 and the second stack 26 of splice trays 28 also mounted to the back side of the respective supporting element 17.

The guiding elements 29, 30 are adapted to guide optical fibers between the respective first stack 21, 25 of splice trays and the respective second stacks 22, 26 of splice trays, namely between e.g. the upper most splice tray 23 of stack 21 to the upper most splice tray 24 of stack 22 or e.g. between the lower most splice tray 27 of stack 25 to the lower most splice tray 28 of stack 26.

Each two splice trays 23, 24 or 27, 28 being in the same relative position within the respective stacks 21, 22 or 25, 26 work together in such a way that the splice trays 24, 28 of the stacks 22, 26 accommodate splices between input/output fibers of the wave division filters and optical fibers contained in the optical cables and that the splice trays 23, 27 of the stacks 21, 25 accommodate the respective wave division filters spliced one to another thereby providing a cascade splicing.

The guide elements 29, 30 provide a short and defined guiding path for the optical fibers between corresponding splice trays 23, 24 or 27, 28 of two stacks 21, 22 or 25, 26 mounted side by side to the respective supporting element 17 of the respective first fiber optic management unit 14.

Strain relief elements 31, 32 are mounted to the front side of the supporting element 17 of the respective first fiber optic management unit 14. Further on, strain relief elements 33, 34 are mounted to the back side of the supporting element 17 of the respective first fiber optic management unit 14. Each strain relief element 31, 32, 33, 34 is adapted to provide strain relief for optical fibers, namely to fiber bundles, contained in and furcated from the optical cables. The strain relief elements 31, 32, 33, 34 are comb tooth shaped and are adapted to accommodate different diameters of fiber bundles. The strain relief elements 31, 33 are adapted to accommodate fiber bundles having a relative large diameter and the strain relief elements 32, 34 are adapted to accommodate fiber bundles having a relative small diameter. After strain relief is provided to a fiber bundle at one of the strain relief element 31, 32, 33 or 34, the individual optical fibers are furcated from the respective fiber bundle. Comb tooth guiding elements 46, 47 guide the furcated, individual optical fibers.

The strain relief elements 31, 32, 33, 34 are positioned above the respective guiding element 29, 30. Below the respective guiding elements 29, 30 there is provided a through hole 39 for guiding optical fibers from the front wall to the back wall and vice versa from the back wall to the front wall of the supporting element 17 of the respective first fiber optic management unit 14.

The individual optical fibers being furcated from the bundles can be guided into a vertical pathway for the optical fibers. Each of the first fiber optic management units 14 comprises a vertical pathway 35 at the front side and a vertical pathway 36 at the back side of the supporting element 17 of the respective first fiber optic management unit 14. Each pathway 35, 36 is adapted to guide optical cable fibers and is positioned on the side of the respective second stack 22, 26 of splice trays remote from the second vertical axis 20.

Curved guide elements 37, 38 provide a safe transition of the fibers from the region of the strain relief elements 31, 32, 33 34 into the vertical pathways 35, 36. The comb tooth guiding elements 46, 47 are positioned proximate a funnel like entry section 48, 49 of the respective curved guide element 37, 38.

Each first fiber optic management unit 14 has recess 50 in the supporting plate 17 of the same. The respective recess 50 is positioned proximate the second vertical axis 20 and allows an easy transition of fiber bundles furcated from optical cables from the guiding brackets 30 of the second fiber optic management units 15 into one of the first fiber optic management units 14.

Each of the first fiber optic management units 14 comprises a patch panel 40 (see Figure 5) with a plurality of adapters 41, 42 adapted to receive connectors of test devices for determining signal quality. The adapters 41 are assigned to the splice connections and wave division filters accommodated in the splice trays 23, 24 of the stacks 21, 22 mounted to the front wall of the respective supporting element 17. The adapters 42 are assigned to the splice connections and wave division filters accommodated in the splice trays 27, 28 of the stacks 25, 26 mounted to the back wall of the respective supporting element 17.

E.g., the upper most adapter 41 of the adapters 41 serves for an ODTR based verification of the signal quality of splices between input/output fibers of the wave division filters and optical fibers contained in the optical cables and of the signal quality of the wave division filters accommodated in the upper most splice trays 23, 24 of the stacks 21, 22.

The lower most adapter 42 of the adapters 42 serves for an ODTR based verification of the signal quality of splices between input/output fibers of the wave division filters and optical fibers contained in the optical cables and of the signal quality of the wave division filters accommodated in the lower most splice trays 27, 28 of the stacks 25, 26.

The patch panel 40 with the plurality of adapters 41, 42 is positioned between the first vertical axis 19 and the second vertical axis 20.

Each of the first fiber optic management units 14 comprises a magnetic stopper 43 keeping the respective first fiber optic management unit 14 in a defined opened position when the same is pivoted around the first vertical axis 19.

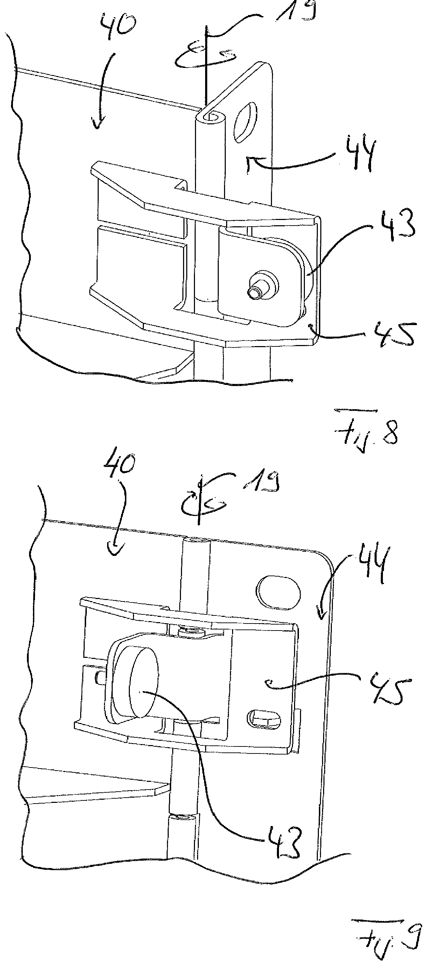

Figures 8 and 9 show a detail of a first fiber optic management unit 14 in the region of the first vertical axis 19 being positioned between the patch panel 40 and a mounting section 44 of the first fiber optic management unit 14. The mounting section 44 is used to mount the respective first fiber optic management unit 14 at the mounting frame 11. The magnetic stopper 43 is fixedly attached to the mounting section 44 of the first fiber optic management unit 14 and contacts an element 45 fixedly attached to the patch panel 40 when the first fiber optic management unit 14 is pivoted around the axis 19 in the position shown in Figures 3, 4 and 8.

### List of reference numerals

- 10: fiber optic distribution device
- 11: mounting frame
- 12: front area
- 13: back area
- 14: first fiber optic management unit
- 15: second fiber optic management unit
- 16: guiding bracket
- 17: supporting element
- 18: cover element
- 19: first vertical axis
- 20: second vertical axis
- 21: first stack of splice trays
- 22: second stack of splice trays
- 23: splice tray
- 24: splice tray
- 25: first stack of splice trays
- 26: second stack of splice trays
- 27: splice tray
- 28: splice tray
- 29: guiding element
- 30: guiding element
- 31: strain relief element
- 32: strain relief element
- 33: strain relief element
- 34: strain relief element
- 35: pathway
- 36: pathway
- 37: curved guide elements
- 38: curved guide elements
- 39: through hole
- 40: patch panel
- 41: adapter
- 42: adapter
- 43: stopper
- 44: mounting section
- 45: element
- 46: guiding element
- 47: guiding element
- 48: entry section
- 49: entry section
- 50: recess

## Claims

1. A fiber optic distribution device having a mounting frame (11), wherein the mounting frame (11) has a front area (12) and a back area (13), and wherein elements for handling optical fibers are mounted on the mounting frame (11), **characterized in that**
a plurality of first fiber optic management units (14) comprising elements for accommodating spliced joints between optical fibers and/or patch connections between optical fibers and/or optical splitters and/or wave division filters is mounted vertically above each other to the front area (12) of the mounting frame (11) in such a way that each of the first fiber optic management units (14) is individually pivotable relative to the mounting frame (11);
a plurality of second fiber optic management units (15) comprising elements for handling optical cables containing the optical fibers is mounted vertically above each other to the back area (13) of the mounting frame (11) in such a way that each of the second fiber optic management units is fixedly attached to the mounting frame.

2. The fiber optic distribution device of claim 1, **characterized in that** each of the first fiber optic management units (14) comprises a supporting element (17) and a cover element (18), wherein each first fiber optic management unit (14) including the respective supporting element and the respective cover element is individually pivotable around a first vertical axis (19) relative to the mounting frame (11), and wherein the cover element (18) of each of the first fiber optic management units (14) is individually pivotable around a second vertical axis (20) relative to the supporting element (17) of the respective first fiber optic management unit, wherein the first vertical axis (19) and the second vertical axis (20) are running in parallel to each other.

3. The fiber optic distribution device of claim 2, **characterized in that** each of the first fiber optic management units (14) comprises at least two stacks (21, 22) of splice trays mounted side by side to a front side of the supporting element (17) of the respective first fiber optic management unit (14) and at least two stacks (25, 26) of splice trays mounted side by side to a back side of the supporting element (17) of the respective first fiber optic management unit (14), wherein a first stack (21) of splice trays mounted to the front side as well as a first stack (25) of splice trays mounted to the back side are adapted to accommodate a plurality of wave division filters spliced to one another, and wherein a second stack (22) of splice trays mounted to the front side as well as a second stack (26) of splice trays mounted to the back side are adapted to accommodate a plurality of splices between input and/or output fibers of the wave division filters and optical fibers contained in the optical cables.

4. The fiber optic distribution device of claim 3, **characterized in that** guiding elements (29, 30) are mounted to the front side and to the back side of the supporting element (17) of the respective first fiber optic management unit (14), wherein the guiding elements (29, 30) are positioned between the respective first stack (21, 25) of splice trays and the respective second stack (22, 26) of splice trays and are adapted to guide optical fibers between the respective first stack of splice trays and the respective second stack of splice trays.

5. The fiber optic distribution device of claim 3 or 4, **characterized in that** the first stacks (21, 25) of splice trays mounted to the front side and to the back side of the supporting element (17) of the respective first fiber optic management unit are facing the second vertical axis (20), wherein the second stacks (22, 26) of splice trays mounted to the front side and to the back side of the supporting element (17) of the respective first fiber optic management unit are remote from the second vertical axis (20).

6. The fiber optic distribution device of one of claims 3 to 5, **characterized by** a vertical pathway (35) for optical fibers mounted to the front side of the supporting element (17) of the respective first fiber optic management unit and by a vertical pathway (36) for optical fibers mounted to the back side of the supporting element (17) of the respective first fiber optic management unit, wherein each pathway (35, 36) is adapted to guide optical cable fibers and is positioned on the side of the respective second stack (22, 26) of splice trays remote from the second vertical axis (20).

7. The fiber optic distribution device of one of claims 4 to 6, **characterized by** strain relief elements (31, 32) mounted to the front side of the supporting element (17) of the respective first fiber optic management unit (14) and by strain relief elements (33, 34) mounted to the back side of the supporting element (17) of the respective first fiber optic management unit (14), wherein each strain relief element (31, 32, 33, 34) is adapted to provide strain relief for optical fibers contained in the optical cables and is positioned above the respective guiding element (29, 30).

8. The fiber optic distribution device of one of claims 2 to 7, **characterized in that** each of the first fiber optic management units (14) comprises a magnetic stopper (43) keeping the respective first fiber optic management unit (14) in a defined opened position when the same is pivoted around the first vertical axis (19).

9. The fiber optic distribution device of one of claims 1 to 7, **characterized in that** each of the first fiber optic management units (14) comprises a patch panel (40) with a plurality of adapters (41, 42) adapted to receive connectors of test devises for determining signal quality.

10. The fiber optic distribution device of claim 8, **characterized in that** the patch panel (40) with a plurality of adapters (41, 42) is positioned between the first vertical axis (19) and the second vertical axis (20).

11. The fiber optic distribution device of one of claims 1 to 10, **characterized in that** each of the second fiber optic management units (15) provides guiding brackets (16) for guiding optical cables inside the mounting frame (11).

12. A fiber optic management unit (14) comprising elements for accommodating spliced joints between optical fibers and/or patch connections between optical fibers and/or optical splitters and/or wave division filters, **characterized in that** the fiber optic management unit (14) is mountable to a mounting frame (11) in such a way the same is individually pivotable around a vertical axis.

13. The fiber optic management unit of claim 12, **characterized by** features of one of claims 2-10.
